# EUROPEAN PATENT APPLICATION

(11) **EP 2 051 194 A2**
(43) Date of publication of application: **22.04.2009**
(21) Application number: 08011297.2
(22) Date of filing: 20.06.2008
(51) Int. Cl.: G06Q 10/00

(54) **System and method for securing RFID tags**

(30) Priority: 21.06.2007 US 766599
(71) Applicant: SkyeTek, Inc., Westminster, CO 80020 (US)
(72) Inventor: Bruns, Logan, Napa California 94559 (US); Chakraborty, Sayan, Niwot Colorado 80503 (US)
(74) Representative: Hughes, Andrea Michelle

(57) **Abstract**

A method for generating and using a consumable RFID tag in a system including a plurality of RFID tag readers communicatively coupled in a network in which the tag includes rewritable tag memory. Data is stored in the tag memory, including a sequence number, a UID, and an ownership ID. The data is signed with a key to generate signed content. Each time the tag is read by one of the readers in the network, the signature and sequence number in the tag memory are validated by comparing signed content stored in the tag with signature data stored in said one of the readers; a new sequence number is stored in the tag memory; contents of the tag memory, including the new sequence number and the ownership ID, are signed with a key to generate new signed content; and the new signed content is written to the tag memory.

## Description

### BACKGROUND

RFID stands for Radio-Frequency IDentification. An RFID transponder, or 'tag', serves a similar purpose as a bar code or a magnetic strip on the back of a credit card; it provides an identifier for a particular object, although, unlike a barcode or magnetic strip, some tags support being written to. An RFID system carries data in these tags, and retrieves data from the tags wirelessly. Data within a tag may provide identification for an item in manufacture, goods in transit, a location, the identity of a vehicle, an animal, or an individual. By including additional data, the ability is provided for supporting applications through item-specific information or instructions available upon reading the tag.

A basic RFID system includes a reader or 'interrogator' and a transponder (RFID tag) electronically programmed with unique identifying information. Both the transceiver and transponder have antennas, which respectively emit and receive radio signals to activate the tag, read data from the tag, and write data to it. An antenna is a feature that is present in both readers and tags, and is essential for the communication between the two. An RFID system requires, in addition to tags, a mechanism for reading or interrogating the tags and usually requires some means of communicating RFID data to a host device, e.g., a computer or information management system. Often the antenna is packaged with the transceiver and decoder to become a reader (an 'interrogator'), which can be configured either as a handheld or a fixed-mount device. The reader emits radio waves in ranges of anywhere from contact to 100 feet (4,72 m) or more, depending upon its power output and the radio frequency used. When an RFID tag passes through the electromagnetic zone (its 'field') created by the reader, it detects the reader's activation signal upon which it conveys its stored information data. The reader decodes the data encoded in the tag's integrated circuit and the decoded data is often passed to a device (e.g., a computer) for processing.

The word transponder, derived from TRANSmitter/resPONDER, indicates the function of an RFID tag. A tag responds to a transmitted or communicated request for the data it carries, the communication between the reader and the tag being wireless across the space between the two. The essential components that form an RFID system are one or more tags and a reader or interrogator. The basic components of a transponder are, generally speaking, fabricated as low power integrated circuit suitable for interfacing to an external coil or dipole, or utilizing 'coil-on-chip' technology, for data transfer and power generation, where the coil or dipole acts as a tag antenna matched to the frequency supported.

### Problem to be solved

It is a problem in the field of RFID to ensure that consumable information and constraints related to RFID tag use are securely transportable from point to point. It is important that this information, which is stored on tags, be difficult or impossible to clone, and also that a secure chain of custody of a tag be maintained as the tag (i.e., the tagged item) is moved or transported. In addition, it is desirable that all tag-related data not necessarily be stored in a central database.

The use of RFID technology also raises two privacy concerns for users: clandestine tracking and inventorying. RFID tags respond to reader interrogation without alerting their owners or bearers. Thus, where read range permits, clandestine scanning of tags is a plausible threat. Most RFID tags emit unique identifiers, even tags that protect data with cryptographic algorithms. As a consequence, a person carrying an RFID tag effectively broadcasts a fixed serial number to nearby readers, providing a ready vehicle for clandestine physical tracking. Such tracking is possible even if a fixed tag serial number is random and carries no intrinsic data. When a tag serial number is combined with personal information, marketers can then identify and profile the consumer using networks of RFID readers - both inside shops and without.

An example of inventorying problems is presented by the distribution of pharmaceuticals. Counterfeit and compromised drugs are increasingly making their way into the public healthcare system and are considered a threat to the public health by the Food and Drug Administration (FDA). Presently, counterfeit pharmaceuticals are a 32 billion dollar industry representing 10 percent of the global market, according to the FDA. The recent increase in patients in the U.S. receiving fake or diluted drugs is focusing more attention on the need for drug authenticity.

Compounding this issue is a complex pharmaceutical distribution infrastructure that makes it difficult to ensure supply chain integrity as products move from point of manufacture to point of dispensing. It is a problem for all of the participants in not just the pharmaceutical supply chain, but in many other types of supply chains to assure their customers safe and authentic products by closing the gaps in supply chain integrity, while also securing their brand, reputation and financial performance.

RFID technology provides the potential for automated track and trace capabilities and allows real-time visibility into where the product is at all times. In the pharmaceutical industry, for example, the counterfeiting problem and resulting threats to patient safety demand an additional requirement for item-level authentication to determine whether or not a product is genuine. By adding a new layer of integrated security combined with RFID technology, manufacturers can greatly increase a patient's confidence that a drug is authentic.

In addition to RFID privacy, there is the equally significant problem of authentication. RFID privacy essentially concerns the problem of 'misbehaving' readers harvesting information from 'well-behaving' tags. RFID authentication, on the other hand, concerns the problem of 'well-behaving' readers harvesting information from 'misbehaving' tags, particularly counterfeit ones. Basic RFID tags are vulnerable to simple counterfeiting attacks. Scanning and replicating such tags requires little money or expertise. An Electronic Product Code (EPC) is merely a bitstring, copyable like any other digital data. EPC tags offer no real access-control mechanisms. It is possible that 'blank', i.e., fully field-programmable EPC tags, need not even resemble RFID tags in order to deceive RFID readers. As a result, EPC tags may carry no real guarantee of authenticity.

Numerous scenarios exist in which counterfeiters can also exploit the vulnerability of RFID tags to cloning. Detection of duplicates ultimately involves consistent and centralized data collection; where this is lacking, digital anti-counterfeiting mechanisms become more important.

### SOLUTION TO THE PROBLEM

The invention provides a system and method as defined in the independent claims for generating and using a consumable RFID tag, which includes rewritable tag memory, in a system having a plurality of RFID tag readers communicatively coupled in a network. Data including a sequence number, a UID, and an ownership ID, is stored in the tag's memory. The data is signed with a key to generate digitally signed content. Each time the tag is read by one of the readers in the network, the signature and sequence number stored in the tag are validated by comparing the tag's present signed content with signature data stored in the reader. A new sequence number is stored in tag memory, and the contents of tag memory, including the new sequence number and the ownership ID, are signed with a key to generate new signed content. The new signed content is then written to the tag's memory.

### BRIEF DESCRIPTION OF THE DRAWINGS

**Figure 1** is a diagram showing an exemplary RFID reader suitable for use with the RFID tags of the present system;

**Figure 2** is a diagram showing exemplary contents of a consumable tag;

**Figure 3** is a diagram showing an RFID tag reader network and an exemplary set of steps performed in provisioning and using a consumable tag in one embodiment of the present system wherein the readers are networked;

**Figure 4** is a flowchart showing an exemplary set of steps performed in using and evaluating a consumable tag, in one embodiment of the present system; and

**Figure 5** is a flowchart showing an exemplary set of steps performed in transferring ownership of a consumable tag, in one embodiment of the present system.

### DETAILED DESCRIPTION

The present method provides RFID tag security techniques that may be used in RFID readers for providing data security for otherwise unsecured tags.

### BACKGROUND

Public-key cryptography typically operates within a framework which uses digital encryption envelopes. Encryption envelopes encrypt data in such a way that access can be obtained only by using the proper key. The encryption envelope consists of a message encrypted using secret-key cryptography and an encrypted secret key. While signatures are typically also encrypted to prevent tampering, they do not need to be encrypted.

When encrypting a document with public-private keys (asymmetric keys), the document may be encrypted with a symmetric key. The symmetric key may then be encrypted with the asymmetric key and attached to the document using an envelope. For decryption, the private asymmetric key is used to open the envelope. The symmetric key is then taken out, and the document is then decrypted.

If the document is to be signed, a hash of the document is generated, and encrypted with the private key of a different asymmetric key pair than the one used for encryption. The public key, which is used to decrypt the hash, is then provided, and the user hashes the original document. If the two hashes match, the signature is determined to be valid.

Asymmetric signatures (ECDSA, RSA and DSA) provide the advantage that they can be verified with only knowledge of the public key so they are the best solution for signatures between multiple parties or organizations.

Symmetric digital signatures (e.g., HMAC) offer the advantage that they are faster and smaller than asymmetric signatures. However, symmetric signatures require a shared secret key so their usefulness is essentially restricted to security within an organization. For some applications a tag reader may hold and never divulge the private (secret) key, which depending upon the circumstances, may increase the security of the tag.

### SYSTEM DESCRIPTION

### RFID reader

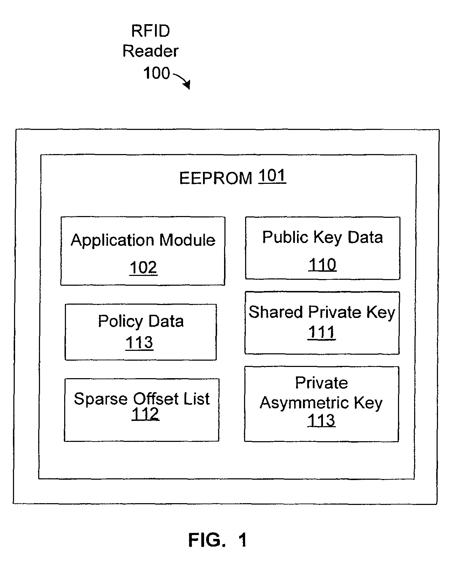

An exemplary RFID reader 100 suitable for use with the RFID tags of the present system is shown in **Figure 1**. Reader 100 includes **EEPROM** or other erasable/reprogrammable memory 101. In an exemplary embodiment, memory 101 includes a sparse offset list 112, which includes one or more base numbers with associated offsets, to enable the determination of currently valid sequence numbers. Memory 101 also includes key data, which may include public key data 110 for other trusted parties, the reader's private asymmetric key 113, and the shared private key 111 between a group of cooperative readers. In addition, memory 101 may include an application module 102 and optional policy data 113. Currently valid sequence numbers need not necessarily be stored in a sparse offset list , but may be stored as a range of valid numbers to save memory (e.g., storing "1-10", versus 1, 5, 6, 10).

If it is desired to enforce policy criteria, by making the reader act as a PEP (Policy Enforcement Point) and/or a PDP (Policy Decision Point), then reader 100 reads both the policy and data from the tag along with additional policy data from the reader. The reader's policy data may describe, for example, the installation or equipment in which the reader is embedded. For example, if the reader is embedded in a piece of medical equipment it may have a predicated resource consumption rate that is different from another reader's environment. Alternatively, the reader may have a minimum tolerance that the item to which the tag is attached must comply with.

Policy can be set up at one hop (each location at which the tag is read or written to) and then enforced at a different hop by a different organization, or possibly by a different reader in a different environment.

An application module, for example, may control a POS (Point of Sale) terminal to ensure that the information it obtains from a tag and, possibly updates to, the tag are valid and not tampered with. In an exemplary reader, the cryptographic functions are built into the reader's firmware. A library may be provided for the application module, but in most cases, reader 100 is allowed to perform the security related operations on its own behalf. Thus, an application module may perform the ciphering and signature work on behalf of the caller.

Where an asymmetric signature such as ECDSA, RSA or DSA is employed, a valid signer's public key(s) 110 may be loaded into and periodically updated in the tag reader's memory 101, which means that for some applications an application module is not required in the tag reader. Alternatively, where symmetric-key encryption is employed, a shared secret key 111 may be loaded into tag reader memory 101.

### Consumable Tags

A consumable RFID tag provides a high level of assurance that the specifications or descriptions stored in the tag, for example, sequence number, keys, and policy criteria data 213, have not been tampered with or falsely assigned. In addition, a consumable tag also provides assurance that tag use constraints (e.g., use counts, alarm values and policy criteria) specific to the tagged item will be complied with. For example, the tag may limit the number of times that a device is used. Alternatively, a consumable tag may contain a complete audit of updates to the tag such a temperature readings for a perishable item. In both cases it should not be possible to revert the tag to a previous state (e.g., by erasing a use indication or other tag data), or to otherwise change the state of the tag in an unauthorized manner.

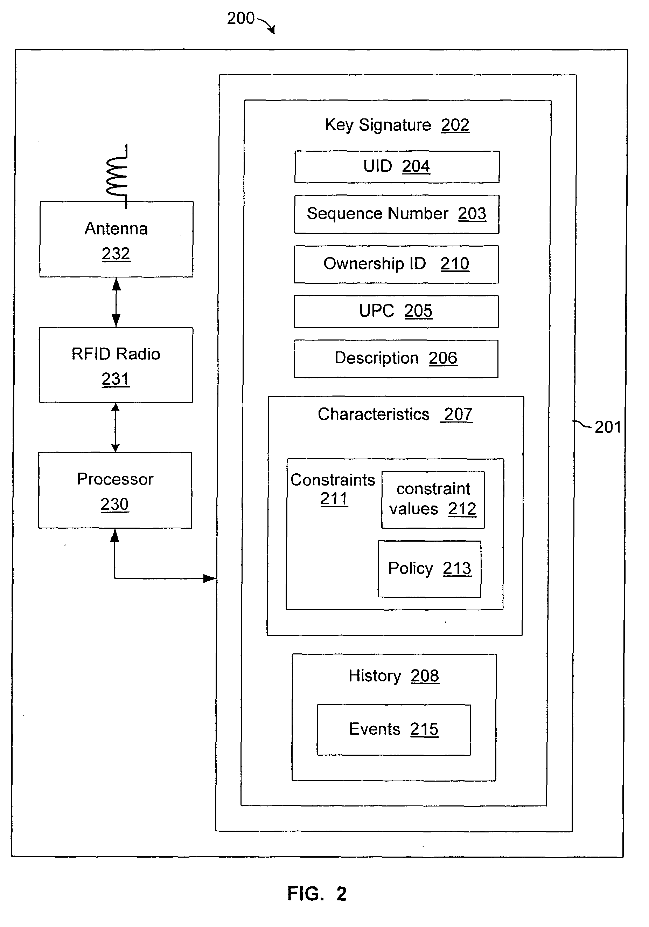

Exemplary contents of a consumable RFID tag 200 are shown in Figure 2. As shown in Figure 2, consumable tag 200 includes a processor or state machine 230 having rewritable memory 201 (e.g., EEPROM memory), and an RFID radio or transceiver 231 which is connected to an antenna 232. Basic components 201, 230, 231, and 232 are well-known in the art.

In accordance with the present system and method, consumable tag memory 201 includes a key signature 202 and other data 209. The key signature 202 includes a sequence number 203, an ownership ID 210, and optionally, a UPC (or EPC) 205, a description 206 of the tagged item, characteristics (possibly including constraints 211 and/or policy data 213), and an optional history 208 of the tagged item's use, e.g., locations where the tag has been read or tracked. The key signature 202 may also include an optional UID (unique identifier) 204. Either asymmetric (e.g., ECDSA, RSA or DSA) or symmetric (e.g., HMAC) signatures may be used. A UID 204 may be optionally included explicitly or implicitly in the key signature 202 to further strengthen the security of the tag 200. However, consumable tags 200 are not required to contain a UID. A writable tag that does not include a UID constitutes a type of consumable tag 200 whose data is changed with each read / update. In this case, after each use, the tag is effectively changed to another tag 200 which is recognizable only to a reader authorized to read the tag, i.e., readable by only a single specific reader.

Consumable tags 200 may be used to provide tag security for a number of applications including, for example, items that can only be used a certain number of times, such as medical equipment, as well as for total-hour-restricted maintenance applications such as fleet and airline operation, or a 'use-by date' for items such as medications. Consumable tags 200 may also be used to maintain a secure audit indicating the circumstances under which the tagged item has been used, e.g., for pharmaceuticals such as temperature sensitive vaccines.

Use counters or use-by dates can be modified for connected systems to set the uses left to zero or to set the expiration date to a time in the past to institute a recall of a consumable (such as a contaminated medication or pet food).

Characteristics of a consumable tag 200 include:
1. Cryptographic features
   (a) Digital Signatures for tag content authentication
      - One of:
         (i) asymmetric signature with one or more signers. (e.g., ECDSA, RSA or DSA.), (Optionally including the signer's public key or more detailed information.); or
         (ii) symmetric signature with one or more signers. (e.g., HMAC-SHA1, HMAC-SHA256 or such.)
   (b) Encryption for content confidentiality
      - One of:
         (i) asymmetric encryption with envelopes for one or more recipient asymmetric keys (e.g., ECEIGamal, EIGamal or RSA) Normal content encryption is performed using a symmetric algorithm (e.g., AES or Triple-DES.) and enveloped by an asymmetric key; or
         (ii) symmetric encryption using one or more shared keys. (e.g. AES or Triple-DES); and
2. A secure chain (or sequence) of authenticated tag contents, such as
   (a) tag use constraints (e.g., use counts, alarm values, and policy criteria), and
   (b) an item description.
   The tag contents are always signed by a trusted entity. Thus, a given reader 100 can determine that the 'chain of trust' (i.e., the sequence of trusted operations) has secured the tag contents from the source to the reader.
3. The tag should not be revertible to a previous state; and
4. the tag should not be replayable.

In an exemplary embodiment, a secure chain or sequence of authenticated tag contents is created by authenticating a tag at each hop, or location at which the tag is read, and ensuring that tag constraints are also enforced at each hop, such that the tag cannot be either reverted to a previous state or otherwise put into another state by a malicious reader. A consumable tag's content is signed with either an asymmetric or symmetric key and the signature value optionally includes a UID 204.

A consumable tag 200 further includes the notion of tag ownership (implemented, for example, by ownership ID 210) and the use of a sequence number 203. Including a UID in the signature strengthens the security of a consumable tag, but tag security is not dependent upon inclusion of a UID.

Table 1, below, is one example of a possible consumable tag's data structure and contents:

**TABLE 1**

| Ref. No. | Data Field | |
|---|---|---|
| | | |
| | CONSUMABLE-TAG ::= SIGNED {SEQUENCE { | |
| 203 | sequence | INTEGER, |
| 210 | ownership ID | OWNER, |
| 204 | uid | [0] OCTET STRING OPTIONAL, |
| 205 | upc | [1] INTEGER OPTIONAL, |
| 206 | description | [2] PRINTABLE STRING OPTIONAL, |
| 207 | characteristics | [3] SEQ. OF CHARACTERISTIC OPTIONAL, |
| 208 | history | [4] SEQUENCE OF EVENT OPTIONAL |
| | }} | |
| 207(n) | CHARACTERISTIC ::= SEQUENCE { | |
| | name | PRINTABLE STRING, |
| | value | [0] VALUE OPTIONAL, |
| 211 | constraints | [1] SEQUENCE OF CONSTRAINT OPTIONAL |
| | } | |
| 211(n) | CONSTRAINT ::= CHOICE { | |
| | maximum | [0] VALUE, |
| | minimum | [1] VALUE, |
| | incrementByOnly [ | 2] VALUE, |
| | decrementByOnly | [3] VALUE, |
| | alertBelow | [4] VALUE, |
| | alertAbove | [5] VALUE, |
| 213 | policy | [6] PRINTABLE STRING |
| | } | |
| | VALUE | ::= CHOICE { |
| | integer | INTEGER, |
| | real | REAL, |
| | data | OCTET STRING, |
| | bits | BIT STRING, |
| | string | PRINTABLE STRING |
| | } | |
| 215 | EVENT | ::= SEQUENCE { |
| | interval | INTERVAL, |
| | description | PRINTABLE STRING, |
| | data | [0] OCTET STRING OPTIONAL |
| | deltas | [1] SEQ. OF CHARACTERISTIC OPTIONAL |
| | } | |

In the exemplary consumable tag data structure shown above, 'upc' (Universal Product Code) 205 may, alternatively, be an EPC (Electronic Product Code), which, essentially, serves as an 'enhanced' UPC, in that it typically contains more data than a corresponding UPC. Description 206 is a description of the tagged item. Optional characteristics 207 and history 208 are described above. CHARACTERISTIC 207(n) indicates the structure of one instance of a particular characteristic 207. Constraints 211 and policy criteria 213 are also described above; CONSTRAINT 211(n) indicates the structure of one instance of a particular constraint 211.

Note that EVENTS 215 may include characteristics and/or constraints in terms of deltas. The most common case would be where an individual reading of a given characteristic is recorded at a reader. This would correspond with the case of a PDP/PEP (explained above) recording values that it used to make certain decisions. In a more specific example, a tagged item may have been let in or out of a storage room without triggering an alarm because the ambient temperature inside or outside the room was acceptable. Thus this particular characteristic- temperature- may have been recorded concurrent with the event of the item entering or exiting the storage room.

It should be noted that, in alternative embodiments, a consumable tag 200 may contain fewer data fields than those shown in the Table 1 example. A 'minimalistic' consumable tag 200 may, for example, include only an ownership ID, a sequence number 203, and a data field 206 including a description of the tagged item.

### Consumable tags in a networked tag reader environment

Where consumable tags 200 are used with a network of tag readers 100, all of the readers in the network should be capable of communicating with each other and, if ownership is not transferred to a particular tag during provisioning (i.e., generation of an initialized tag), then the readers in the network must also initially either directly or indirectly communicate with a remote server to initialize the tag. In this case, a consumable tag's use constraints are securely enforced, and the consumables themselves may be used at any number of readers.

Note that communication with a remote server is only required to transfer tag ownership from the manufacturer to a local reader, or if it is desired, for example, to implement a 'product recall' function. A product recall may be implemented by setting, in tag memory, an indicator of the number of available uses or valid 'use-by' date (and/or time) to zero to prevent use of the consumable. If ownership transfer is performed during provisioning (e.g., by a delivery person), then access to a remote server is not required.

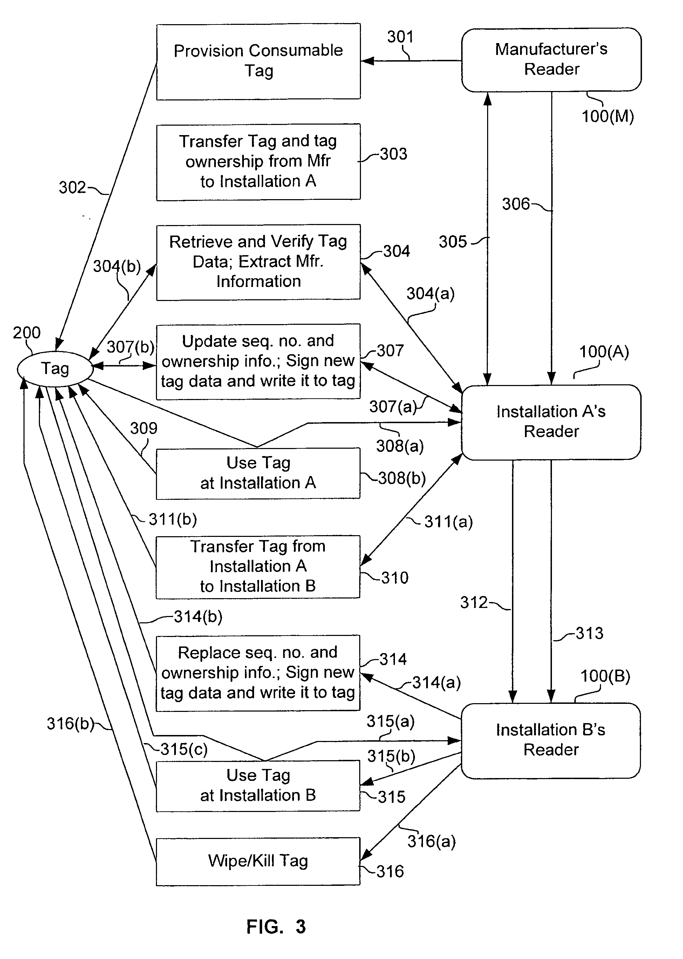

**Figure 3** is a diagram showing an RFID tag reader network and an exemplary set of steps performed in provisioning and using a consumable tag in one embodiment of the present system where the readers are networked. Information can be passed between readers in response to real-time events, or the information can be provisioned initially, and then updated only as necessary (e.g., if a security breach occurs). Thus, the present reader network may exist either on a continuous, real-time basis or on an a-priori basis. Figure 3 is best understood when viewed in conjunction with Figure 2, which shows exemplary types of data stored on a consumable tag 200. As shown in Figures 2 and 3, at step **301**, a manufacturer's reader 100(M) provisions a consumable tag 200, by assigning (1) an ownership ID 210, (2) a sequence number 203, (3) characteristics 207 and tag use constraints 211, in tag memory 201. Tag 200 is then digitally signed, in an exemplary case, including UID 204 (explicitly or implicitly), sequence number 203, ownership ID 210, UPC (or EPC) 205, description 206, characteristics 207, and history 208 using either an asymmetric signature or a symmetric signature, to generate key signature 203.

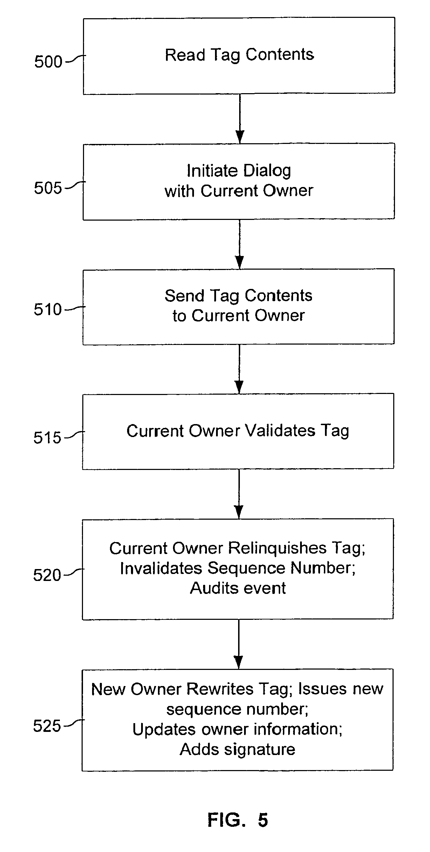

At step **302**, the signed data is written to the tag 200 by the manufacturer's reader 100(M). The tag is then transferred from the reader 100(M) to installation A, as indicated at block **303**, and ownership of the tag is transferred to installation A's reader 100(A). The process of transferring tag ownership is described in detail below, with respect to Figure 5.

At step **304** [indicated by arrows **304(a)** / **304(b)],** installation A's reader 100(A) retrieves all data stored in tag memory from tag memory 201. The signature on the data is then verified to authenticate the tag data, and manufacturer information, including ownership ID 210, and characteristics 207 (including constraints 211) is extracted. At step **305**, reader 100(A) negotiates a secure and authenticated conversation with manufacturer's reader 100(M), and submits the entire contents of tag memory for transfer of ownership to the reader 100(A).

At step **306,** manufacturer's reader 100(M) relinquishes ownership (as described in detail below) and audits the transfer thereof to installation A's reader 100(A). At step **307**, reader 100(A) updates the sequence number 203 and replaces ownership information, (e.g., ownership ID 210 or a URL), in tag memory 201, as indicated by arrows **307(a) / 307(b).** Reader 100(a) then signs the new tag data and writes it to the tag.

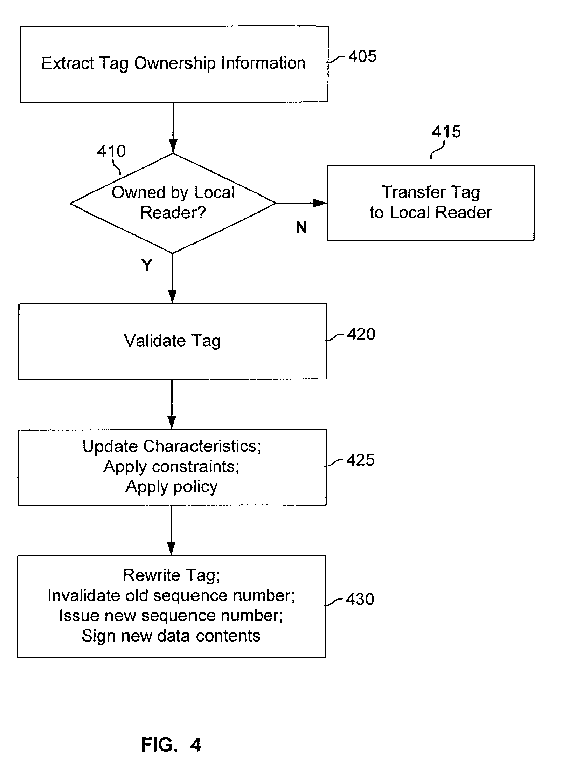

When tag 200 is used at installation A, reader 100(A) first retrieves and verifies the tag data (i.e., validates the tag), at step **308(a).** Reader 100(A) updates the tag data according to the particular use and tag constraints 211, replaces sequence number 203 and updates characteristics 207 (for example, the reader may decrement a use count or reduce a quantity or volume indication), and then signs the tag data, at step **308(b).** Reader 100(A) then writes the tag data back to tag 200, at step **309**. A more detailed description of the process of using a tag is described below with respect to Figure **4**.

When tag 200 is transferred from Installation A to Installation B, as indicated at block **310**, installation B's reader 100(B) retrieves the tag data, verifies it, and extracts reader 100(A)'s information, as indicated by arrows **311(a)**/**311(b).** Reader 100(B) then negotiates a secure and authenticated conversation with reader 100(A) and submits the tag data for transfer of ownership to reader 100(B), at step **312**. At step **313**, reader 100(A) relinquishes ownership and audits the transfer thereof. At step **314**, reader 100(B) replaces sequence number 203 and ownership information (e.g., an ownership ID 210); the new tag data is then signed and written to the tag, as indicated by arrows **314(a) / 314(b)**.

When tag 200 is used at Installation B, at step **315,** installation B's reader 100(B) retrieves and verifies the tag data, as indicated by arrow **315(a)**. Reader 100(B) updates the tag data according to the particular use and constraints 211, then replaces sequence number 203, updates characteristics 207, and signs and writes the tag data back to the tag, as indicated by arrows **315(b) / 315(c).**

When a tag is completely consumed (e.g., when it reaches any constraints such as number of uses, or an expiration time), the tag 200 is optionally decommissioned, at step **316.** In this situation, the tag is 'wiped' or 'killed', at steps **316(a) / 316(b)**. If decommissioned, the tag is killed in such a fashion that it is unreadable. Depending on the tag implementation, decommissioning may involve data deletion (tag wiped) or may mean changing the tag to a state in which it no longer responds to any reader again (tag killed).

**Figure 4** is a flowchart showing an exemplary set of steps performed in using and evaluating a consumable tag, in one embodiment of the present system. As shown in Figure 4, at step **405**, tag ownership information is extracted from a tag 200 by reading the tag. If the tag is not owned by the local (presently interrogating) reader, then tag ownership is transferred to another local reader which can communicate to the tag. A "local reader" is any one of a number of readers that can communicate with each other, where at least one holds a policy and at least one can communicate with a target tag at some point. Otherwise, if the tag is owned by a local reader, then the tag is validated by verifying the signature, and ensuring that the sequence number is valid, at step **420**.

At step **425,** the tag's characteristics are updated, and its constraints and policy criteria are applied. Finally, at step **430**, the old sequence number is invalidated in the owning reader's memory, a new sequence number is issued, the new contents are signed, and the tag is rewritten with the new tag information.

**Figure 5** is a flowchart showing an exemplary set of steps performed in transferring ownership of a consumable tag, in one embodiment of the present system. As shown in Figure 5, at step **500**, a tag reader, e.g., reader 100(B), reads the contents of a tag 200. At step **505**, the tag reader to which ownership is to be transferred [reader 100(B)] initiates a dialog with the current tag owner, e.g., reader 100(A).

At step **510,** the contents of the tag 200 are sent from reader 100(B) to the current owner of the tag. At step **515**, the current owner validates the tag, and at step **520**, the current owner relinquishes ownership of the tag by invalidating the current sequence number, and audits the current event. At step **525**, the new tag owner generates new tag data by issuing a new sequence number, updating ownership information, adding the digital signature, and then rewrites the tag, storing the new tag data in tag memory 201.

### Tag ownership and sequence numbers

A consumable tag 200 has a particular state associated therewith. A consumable tag 200 includes a non-revertible / non-replayable state indicator, such as a sequence number (e.g., "sequence" 203 in Table 1 above), which provides protection against the tag's state being reverted or the tag being 'replayed'. The term 'replayed' means that any constraints (e.g., limited number of uses, count down time to expiration) have been reset to make it appear unchanged, such that a single use tag can be used multiple times, or the countdown time has been reset so that it never expires. Tag state information may also include ownership ID 210, characteristics 207, and other data stored on the tag 200. The sequence number 203 is tied to the other signed content in the tag. Once the tag content changes values the tag is invalidated so that it cannot be replayed with the previous contents. For example, a copy of a tag cannot be backed up, then used with the intent of restoring the backup and using it again.

Protection against tag replaying is accomplished through the concept of tag ownership and the use of a sequence number 203, which is cryptographically linked to the data stored on tag and which cannot be reverted. Here, "cryptographically linked" means that information stored on the tag is combined with the sequence information into an encrypted digest. Tag ownership is indicated by an ownership ID field 210 in tag memory 201. In essence, at any given time, a tag 200 belongs to one reader (or the manufacturer, in a special case), which has authority over the tag 200.

The owning reader's signature key (i.e., public key 110 or shared secret key 111) is used to cryptographically bind the sequence number 203 to the data or current state information, such as the tag contents, the characteristics, and the current values of data stored on the tag. The owning reader is thus uniquely capable of validating the sequence number in the signed content of a consumable tag 200.

An alternative method may use a database of stored UlDs instead of using sequence numbers. This method requires interaction with a central database server for every use of a particular tag.

Making a local reader authoritative over a tag allows the reader to typically act locally without network access. The reader requires network access only for transferring ownership either from a peer or from the manufacturer (if a given tag is not pre-provisioned). As indicated above with respect to Figure 5, the process of transferring ownership includes having one reader contact another reader, and then rewrite the tag with the same constraints, but with a new sequence number and signature from the new owning reader. The previous owner then invalidates the previous sequence number.

Using a sequence number 203 instead of (or in addition to) a UID 204 provides the ability to efficiently maintain tag state. The use of sequence number offsets reduces the problem of tag state maintenance by requiring that only a record of valid ranges of sequence numbers be stored. It may only be necessary to store, for example, a base number and offset values, such as 344566, +20, +100, +6, to indicate that the sparse ranges of sequence numbers 344566 - 344486 and 344586 - 344592 are currently valid. The offsets are used to denote alternating gaps of valid and invalid sequences, and are included in sparse offset list 112. The rest of the state information and/or constraints for a tag can be stored in the signed content of the tag.

If the consumables [i.e., the various characteristics 207(n)] are not thrown away or otherwise discarded until they are completely used up, the state information may be reduced down to a single sequence number, stored in the reader, without any additional offsets. All of the real data is still stored on the tag; however, the owning reader has to keep track of only the single number. The reader can then later verify its own signature to recognize and validate the tag's sequence number and data stored in the tag that was written by the reader. Even in the case where a consumable tag is discarded but not properly decommissioned, the list of offsets may still be stored efficiently for a very large number of consumables over a long period of time. For non-networked use cases, a list of offsets may be stored in reader memory 101.

### Non-networked consumable tags

In a non-networked tag reader system, after delivery and provisioning, the consumables are only usable at one reader 100. Non-networked readers may not require an application module, since, in most cases, the main function of the application module is to determine a network state. If a network state is not required, then it is possible that the application code can either be incorporated either into the reader firmware, or into the device in which the reader is embedded. In such a case, no separate application module is required, thus simplifying reader fabrication.

Initially, in one embodiment of the present system, a manufacturer's reader provisions a consumable tag 200, by assigning an ownership ID 210, a sequence number 203, constraints 211, and an optional UID, in tag memory 201. Next, the tag is signed with a manufacturer's asymmetric key. Tag (and item) ownership is then transferred to a non-networked reader 100.

Each time the tag is read, (1) the signature and sequence number are validated; (2) tag constraints are enforced and updated; (3) a new sequence number 203 is issued; (4) the updated constraints, the new sequence number and UID 204, if present, are signed with either an asymmetric or symmetric key; and (5) the new signed content is written to tag memory 201.

Certain changes may be made in the above methods and systems without departing from the scope of that which is described herein. It is to be noted that all matter contained in the above description or shown in the accompanying drawings is to be interpreted as illustrative and not in a limiting sense. For example, the methods shown in Figures 3-5 may include steps other than those shown therein, and the systems and structures shown in Figures 1 and 2 may include different components than those shown in the drawings. The elements and steps shown in the present drawings may be modified in accordance with the methods described herein, and the steps shown therein may be sequenced in other configurations without departing from the scope of the claims.

## Claims

1. A method for generating and using a consumable RFID tag in a system including a plurality of RFID tag readers communicatively coupled in a network , wherein the tag includes rewritable tag memory, the method comprising:
digitally signing tag data, including a sequence number, a UID, and an ownership ID, to generate signed content;
storing the signed content in the tag memory; and
each time the tag is read by one of the readers in the network:
validating signature data, including the sequence number, stored in the tag memory, by comparing signed content stored in the tag with signature data stored in said one of the readers;
storing a new sequence number in the tag memory;
signing contents of the tag memory, including the new sequence number and the ownership ID, with a key, to generate new signed content; and
writing the new signed content to the tag memory.

2. The method of claim 1, wherein tag ownership is transferred by:
establishing a dialog between an owning reader, having ownership of the tag, and the present reader currently reading the tag;
wherein the owning reader invalidates the previous sequence number in the owning reader's memory; and
wherein the present reader generates new signed tag content by digitally signing the tag's contents including the ownership ID, a new sequence number, and other data to be stored in the tag memory.

3. The method of claim 1, wherein said sequence number and said ownership ID together comprise a state indicator;
wherein the steps of signing and storing are performed by a provisioning reader in the network;
transferring tag ownership from the provisioning reader to another reader in the network; and
each time the tag is read by one of the readers in the network:
if the tag is not owned by a present reader currently reading the tag, then transferring tag ownership to the present reader from an owning reader having present ownership of the tag;
validating signature data, including the sequence number stored in the tag memory, by comparing the signed content presently stored in the tag with signature data stored in the present reader;
storing a new sequence number in the tag memory;
signing contents of tag memory, including the new sequence number and the ownership ID, with a key, to generate new signed content; and
writing the new signed content to the tag memory;
wherein the steps of validating, storing the new sequence number, signing the contents, and writing are performed by the present reader.

4. The method of any preceding claim, wherein the data in tag memory is signed using an asymmetric key.

5. The method of any of claims 1 to 4, wherein the data in tag memory is signed using a symmetric key.

6. The method of any preceding claim, wherein tag ownership is transferred by:
establishing a dialog between the owning reader and the present reader;
wherein the owning reader invalidates the previous sequence number in the owning reader's memory; and
wherein the present reader generates new signed tag content by digitally signing the tag's contents including the ownership ID, a new sequence number, and other.

7. The method of claim 6, wherein the new sequence number is generated from a sparse offset list containing indicia comprising offsets plus base numbers, wherein the list enables a full list of valid sequence numbers to be generated therefrom.

8. The method of claim 6, wherein the other data to be stored in the tag memory includes policy criteria which is established at one network hop and then enforced at a different hop.

9. The method of claim 6, wherein the other data to be stored in the tag memory includes policy criteria which is established at one network hop and then modified at a subsequent hop.

10. The method of claim 7, wherein the policy criteria is modified to implement a product recall by setting indicia, stored in the tag memory, to indicate that a number of available tag uses is zero, regardless of a present indication that the number of available tag uses is non-zero.

11. The method of claim 9, wherein the policy criteria is modified to implement a product recall by indicating, in the tag memory, that a number of available tag uses is zero.

12. The method of claim 9, wherein the policy criteria is modified to implement a product recall by indicating, in the tag memory, that a product use-by time has expired.

13. The method of any of claims 1 to 5, wherein the process of transferring tag ownership includes:
establishing a dialog between the owning reader and the present reader;
sending the contents of the tag, from the present reader to the owning reader;
validating the tag, wherein the present reader compares the tag's present signed content with the information stored in the present reader; and
relinquishing ownership of the tag, wherein the owning reader invalidates the current sequence number;
wherein the present reader:
issues new tag data including a new sequence number;
updates the ownership ID to indicate ownership by the present reader, generates a new digital signature including the new sequence number and the ownership ID, and
stores the new tag data and the new digital signature in the tag memory.

14. The method of claim 1, 2 or 3, wherein the process of validating the signature data includes using signature information stored in the present reader.

15. The method of claim 1, 2 or 3, wherein the contents of tag memory that are signed include updated constraints, the new sequence number, and the UID.

16. The method of any preceding claim, wherein the sequence number, the UID, and the ownership ID comprise a state indicator which is used to prevent the tag's state from being reverted.

17. The method of any of claims 1 to 15, wherein the sequence number, the UID, and the ownership ID comprise a state indicator which is used to prevent the tag from being replayed.

18. The method of claim 17 wherein the state indicator includes tag use constraints.

19. The method of claim 18, wherein the tag use constraints include at least one constraint selected from the list consisting of use counts, alarm values, use-by date, valid use time, and policy criteria.

20. A method for generating a consumable RFID tag in a system including a plurality of RFID tag readers communicatively coupled in a network, wherein the tag includes rewritable tag memory, the method comprising:
digitally signing tag data, including a sequence number, a UID, and an ownership ID, to generate signed content; and
storing the signed content in the tag memory;
wherein the steps of storing and signing are performed by one of the readers in the network.

21. The method of claim 20, wherein the tag is used by performing the steps of:
transferring tag ownership from the provisioning reader to another reader in the network;
each time the tag is read by one of the readers in the network:
if the tag is not owned by a present reader currently reading the tag, then transferring tag ownership to the present reader from an owning reader having present ownership of the tag;
validating the signature and sequence number in the tag memory;
storing a new sequence number in the tag memory;
signing contents of tag memory, including updated tag use constraints, the new sequence number and the UID, with a key, to generate new signed content; and
writing the new signed content to the tag memory;
wherein the steps of validating, storing, signing, and writing are performed by the present reader; and
wherein the present reader and the owning reader are included in the network.

22. The method of claim 21, further including:
when the tag is read by a tag reader:
enforcing the constraints stored in the tag memory; and
updating constraints stored in the tag memory.

23. A data structure for a consumable RFID tag, the data structure comprising:
a key signature field including a sequence number field and an ownership ID field; and
at least one data field;
wherein:
data stored in the sequence number field and in the ownership ID field are digitally encrypted; and
ownership of the tag is indicated by the ownership ID field, wherein
said ownership indicates that one specific tag reader is capable of reading information stored on the tag.

24. The data structure of claim 23, wherein the key signature field and the data are stored in rewritable memory of an RFID tag.

25. The data structure of claim 23, wherein the key signature field also includes a UID.

26. The data structure of claim 23, wherein information stored in the data field is digitally encrypted using a digital key.

27. The data structure of claim 23, wherein a digital key is used to cryptographically bind the sequence number to the data and to other current state information.

28. A consumable RFID tag including rewritable memory in which is stored information comprising:
a sequence number field;
an ownership ID field; and
at least one data field;
wherein:
data stored in the sequence number field and in the sequence number field are encrypted using a digital key; and
ownership of the tag is indicated by the ownership ID field, wherein
at any given time, said ownership indicates that one specific tag reader is capable of reading information stored on the tag.

29. The RFID tag of claim 28, wherein the key signature field also includes a UID.

30. The RFID tag of claim 28, wherein the key is a public key.

31. The RFID tag of claim 28, wherein the key is a shared secret key.

32. The RFID tag of claim 28, wherein information stored in the data field is digitally encrypted using the key.

33. A method for generating and using a consumable RFID tag in a system including at least one RFID tag reader, wherein the tag includes rewritable tag memory, the method comprising:
storing, in the tag memory, indicia of a number of available uses of the tag; and
implementing a product recall by setting the indicia to zero, regardless of a present indication that the number of available uses is non-zero.

34. The method of claim 33, including storing a product use-by date in the tag memory, wherein the product recall is implemented by setting the product use-by date to indicate that the use-by date has expired.

35. The method of claim 33, wherein a product use-by date is stored in the tag memory in lieu of the indicia of a number of available uses, and wherein the product recall is implemented by setting the product use-by date to indicate that the use-by date has expired.
